# EUROPEAN PATENT APPLICATION

(11) **EP 4 650 729 A1**
(43) Date of publication of application: **19.11.2025**
(21) Application number: 25176368.6
(22) Date of filing: 14.05.2025
(51) Int. Cl.: G01H 1/00, G01M 7/00, G01M 13/028

(54) **EQUIPMENT STATE DETECTION DEVICE AND EQUIPMENT STATE DETECTION METHOD**

(30) Priority: 16.05.2024 JP 2024080364
(71) Applicant: Yokogawa Electric Corporation, Tokyo 180-8750 (JP)
(72) Inventor: OGAWA, Hiromitsu, Musashino-shi, Tokyo, 180-8750, (JP); IKEDA, Kenta, Musashino-shi, Tokyo, 180-8750, (JP); KOJIMA, Yasuhiro, Musashino-shi, Tokyo, 180-8750, (JP); KONADA, Soichiro, Musashino-shi, Tokyo, 180-8750, (JP)
(74) Representative: Winter, Brandl - Partnerschaft mbB

(57) **Abstract**

The present disclosure provides an equipment state detection device (10) that detects an operation abnormality of equipment or the like. The equipment state detection device (10) includes an abnormality detector (13). The abnormality detector (13) included in the equipment state detection device detects (10) an abnormality of the target object based on an abnormal operation region defined according to an operation state of the target object. The abnormal operation region is a region of vibration of the target object and sound from the target object generated when the operation of the target object is abnormal.

## Description

### FIELD

The present disclosure relates to an equipment state detection device and an equipment state detection method.

### BACKGROUND

A device for detecting an operation abnormality of equipment or the like used in a plant, a factory, or the like has been proposed. For example, a device that detects an abnormality of a rotary machine in a plant by detecting sound and vibration generated due to a rotor abnormality phenomenon of the rotary machine has been proposed (e.g., JP H7-182035 A).

### SUMMARY

However, in the above-described conventional technique, since an abnormality is detected according to a procedure of confirming an acoustic diagnosis result based on vibration data, there is a problem that it takes time to detect an abnormal operation.

Therefore, the present disclosure proposes an equipment state detection device and an equipment state detection method that reduce time needed for detecting an operation abnormality of equipment or the like.

It is an object of the present disclosure to at least partially solve the problems in the conventional technology.

An equipment state detection device according to the present disclosure includes an abnormality detector configured to detect an abnormality of a target object based on an abnormal operation region defined according to an operation state of the target object, the abnormal operation region being a region of vibration of the target object and sound from the target object generated when the operation of the target object is abnormal.

The above and other objects, features, advantages and technical and industrial significance of this disclosure will be better understood by reading the following detailed description of presently preferred embodiments of the disclosure, when considered in connection with the accompanying drawings.

### BRIEF DESCRIPTION OF THE DRAWINGS

FIG. 1 is a diagram illustrating a configuration example of an equipment state detection device according to an embodiment of the present disclosure;
FIG. 2 is a diagram illustrating an example of an abnormal operation region according to the embodiment of the present disclosure;
FIG. 3 is a diagram illustrating an example of a processing procedure of the equipment state detection device according to the embodiment of the present disclosure;
FIG. 4 is a diagram illustrating an example of a processing procedure of the equipment state detection method according to the embodiment of the present disclosure;
FIG. 5 is a diagram illustrating an example of noise removal according to the embodiment of the present disclosure;
FIG. 6 is a diagram illustrating an example of a noise removal procedure according to the embodiment of the present disclosure;
FIG. 7 is a diagram illustrating an example of detection of a margin according to the embodiment of the present disclosure;
FIG. 8 is a diagram illustrating an example of abnormality detection according to the embodiment of the present disclosure;
FIG. 9 is a diagram illustrating an example of abnormality detection of other equipment according to the embodiment of the present disclosure; and
FIG. 10 is a diagram illustrating an example of a variation according to the embodiment of the present disclosure.

### DESCRIPTION OF EMBODIMENTS

Hereinafter, embodiments of the present disclosure will be described in detail with reference to the drawings. The description will be given in the following order. In each of the following embodiments below, the same parts are given the same reference signs to omit redundant description.
1. Embodiment
2. Variation

### 1. Embodiment

### Configuration of equipment state detection device

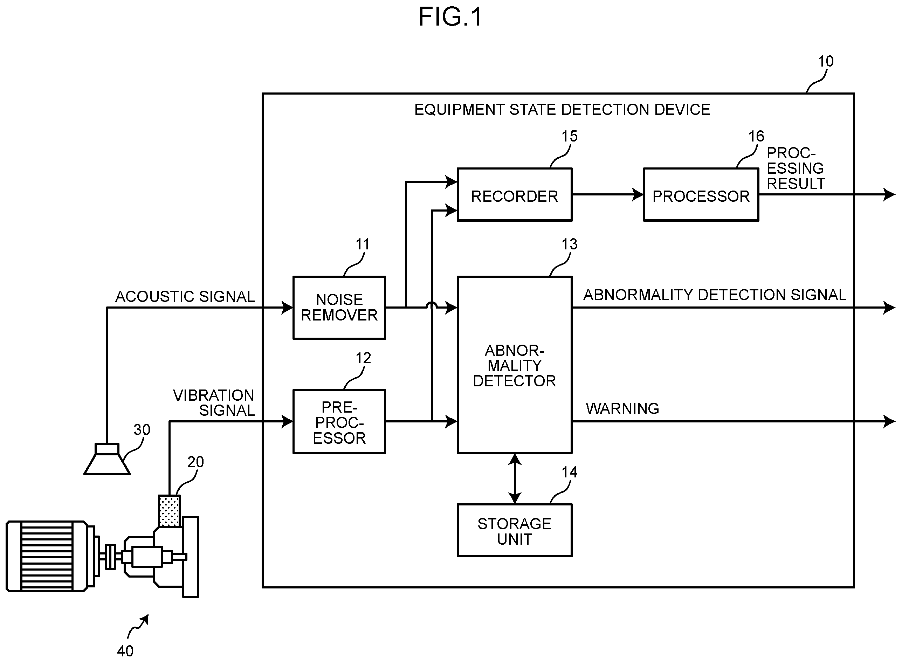

FIG. 1 is a diagram illustrating a configuration example of an equipment state detection device according to the embodiment of the present disclosure. FIG. 1 is a block diagram illustrating a configuration example of an equipment state detection device 10. The equipment state detection device 10 detects a state of equipment used in a plant or a factory. The state includes an abnormal state during operation of the equipment. The equipment state detection device 10 detects a state of a target object. A pump 40 is assumed as the target object. The pump 40 is a device that is rotationally driven by a motor to pressure-feed liquid such as water. Note that a device having a rotation mechanism such as a power generator or a compressor can also be the target object.

The equipment state detection device 10 includes a noise remover 11, a preprocessor 12, an abnormality detector 13, a storage unit 14, a recorder 15, and a processor 16. Note that a vibration sensor 20 and a microphone 30 are further illustrated in the drawing.

The vibration sensor 20 is attached to the pump 40 to detect vibration. The vibration sensor 20 generates a vibration signal, which is a signal for vibration, and outputs the vibration signal to the equipment state detection device 10.

The microphone 30 is disposed near the pump 40 to detect sound from the pump 40. The microphone 30 generates an acoustic signal, which is a signal for sound, and outputs the acoustic signal to the equipment state detection device 10.

Note that a combined sensor that detects vibration and sound may be used instead of the vibration sensor 20 and the microphone 30. Still more, a camera may be used instead of the vibration sensor 20. **In** this case, the vibration is detected from motion of an image captured by the camera.

The noise remover 11 removes noise from the acoustic signal. The acoustic signal from which the noise has been removed is input to the abnormality detector 13. Noise removal will be described in detail later. Note that fast Fourier transform (FFT) processing, statistical processing, or the like for frequency analysis may also be performed on the acoustic signal after the noise removal.

The preprocessor 12 performs preprocessing on the vibration signal. The preprocessing corresponds to, for example, detection of a root mean square (RMS) value of the vibration signal. The RMS value can be detected for example, by calculating a RMS value of the vibration signal in a predetermined period. A known method can be applied to calculation of the RMS value. The RMS value of the vibration signal is input to the abnormality detector 13. Note that the FFT processing and the statistical processing described above may also be performed as preprocessing. Note that the preprocessor 12 may be omitted. In this case, the abnormality detector 13 described later performs processing based on the vibration signal from the vibration sensor 20.

The abnormality detector 13 detects an abnormality of the target object (pump 40) based on an abnormal operation region. Here, the abnormal operation region is a region of vibration of the target object and sound from the target object when the operation of the target object is abnormal, and is defined according to the operation state of the target object. Details of the abnormal operation region will be described later. When an abnormality of the target object is detected, the abnormality detector 13 outputs an abnormality detection signal to an external device. The abnormality detection signal is, for example, an alarm signal.

The abnormality detector 13 further detects quasi-abnormal operation of the target object based on a quasi-abnormal operation region that is a region bordering the abnormal operation region. The quasi-abnormal operation is an operation that is not in the abnormal state but needs to be known. When the quasi-abnormal operation is detected, the abnormality detector 13 outputs a warning.

The storage unit 14 holds information on the abnormal operation region. The abnormality detector 13 detects an abnormality based on the abnormal operation region held in the storage unit 14. The storage unit 14 also holds information on the quasi-abnormal operation region. The abnormality detector 13 detects the quasi-abnormal operation based on the quasi-abnormal operation region held in the storage unit 14.

The recorder 15 records the acoustic signal and the vibration signal. The recorder 15 in the drawing records the acoustic signal output from the noise remover 11 and the vibration signal output from the preprocessor 12. Furthermore, the recorder 15 outputs recorded acoustic signal and vibration signal to the processor 16.

The processor 16 performs processing on the acoustic signal and the vibration signal recorded in the recorder 15. The processing in the processor 16 corresponds to, for example, equipment state evaluation (e.g., evaluation such as disassembly, inspection, and cleaning). Specifically, the processor 16 can evaluate each work from changes in the acoustic signal and the vibration signal before and after each work. By evaluating each standard work, for example, an effect of work by each worker can be identified, and the evaluation can be applied to work improvement (improvement in cleaning level, procedures, consumption of consumables, etc.). **In** addition, it is possible to identify the state of target equipment by periodically measuring sound and vibration. By comparing with a standard state of the target equipment, maintenance according to the equipment state can be executed at an appropriate timing.

The equipment state detection device 10 can also detect a state other than the abnormal operation of the target object. For example, it is also possible to adopt a configuration further provided with an output detector that detects an output of the target object (pump 40), and processing is performed on the output detected of the target object.

### Abnormal operation region

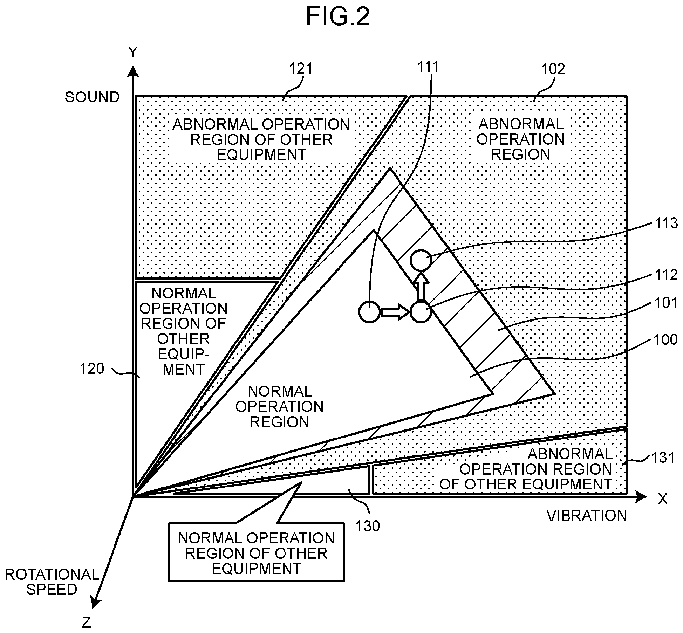

FIG. 2 is a diagram illustrating an example of the abnormal operation region according to the embodiment of the present disclosure. FIG. 2 is a graph illustrating the abnormal operation region. An X-axis of the graph represents vibration. A Y-axis of the graph represents sound. **In** the drawing, a white triangular region represents a normal operation region 100. A dot-hatched region represents an abnormal operation region 102. A vibration and sound region at the time of operation abnormality corresponds to the abnormal operation region. An obliquely hatched region represents a quasi-abnormal operation region 101. Vertexes on the right side of the normal operation region 100 and the quasi-abnormal operation region 101 correspond to resonance points. At the resonance point, sound and vibration tend to increase, but there is no abnormality in the operation.

A white circle 111 represents an operation point during normal operation. **In** this state, when a problem occurs and the vibration increases, the operation point shifts to a white circle 112. **In** this state, when the sound increases due to increased vibration, the operation point shifts to a circle 113. As a result, the target object reaches the quasi-abnormal operation region 101. **In** this manner, the quasi-abnormal operation region and the abnormal operation region can be detected from positions of the sound and the vibration on the graph.

The detection is based on the fact that a relationship between sound and vibration in the normal state collapses in the abnormal state. Note that it is also possible to configure a relationship between the sound and the vibration by focusing on a specific frequency component.

A region 120 and a region 130 represent normal operation regions of other equipment. In addition, a region 121 and a region 131 represent abnormal operation regions of other equipment. As described above, a region with small vibration or a region with small sound can be regarded as a state of other equipment different from the target object.

Note that a Z-axis in the drawing represents a rotational speed. The normal operation region 100, the quasi-abnormal operation region 101, and the abnormal operation region 102 in the drawing are regions at the maximum rotational speed. Although not illustrated, the normal operation region 100, the quasi-abnormal operation region 101, and the abnormal operation region 102 are generated for each specific rotational speed. In the drawing, since the target object is the pump 40, the rotational speed is used as a parameter. An operation load factor of the target object is applicable to the Z-axis. Here, the operation load factor represents a ratio of an actual load to a rated load (maximum load). The normal operation region 100, the quasi-abnormal operation region 101, and the abnormal operation region 102 in the drawing can be regarded as a state of the operation load factor of 100% (rated load). Further, for example, the quasi-abnormal operation region 101 and the abnormal operation region 102 can be defined for each specific operation load factor such as the operation load factors of 90%, 80%, and 70%.

The abnormality detector 13 can select the quasi-abnormal operation region 101 and the abnormal operation region 102 according to the operation load factor of the target object and use the regions for detecting the quasi-abnormal operation and the abnormal operation.

Note that the Z-axis in FIG. 2 may be other parameters, for example, pressure or light (absorbance).

### Processing by equipment state detection device

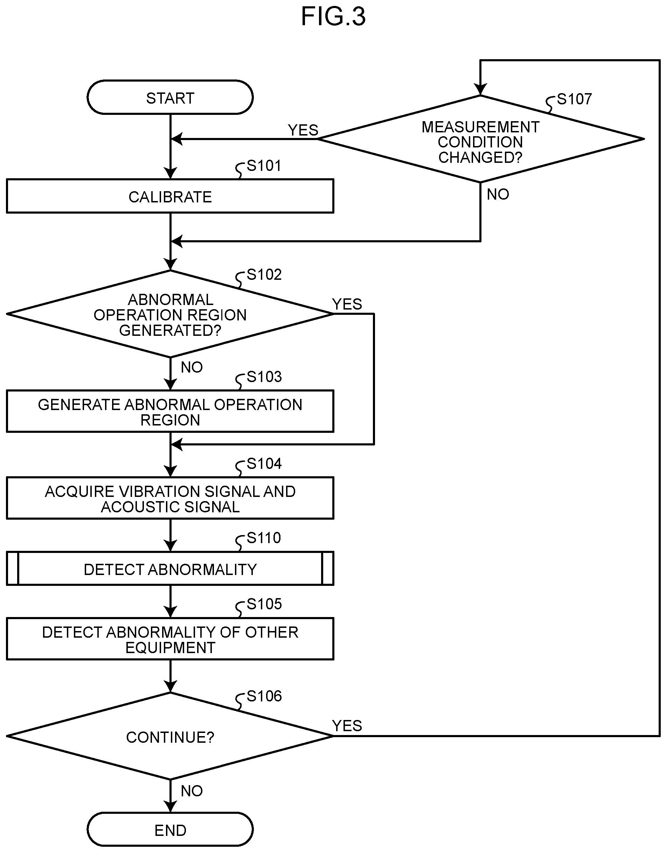

FIG. 3 is a diagram illustrating an example of a processing procedure of the equipment state detection device according to the embodiment of the present disclosure. FIG. 3 is a flowchart illustrating the example of the processing procedure of an abnormality detection process in the equipment state detection device 10. First, the abnormality detector 13 corrects (calibrates) a position (attitude) of the vibration sensor 20 (Step S101). When a three-axis acceleration sensor is used as the vibration sensor 20, a magnitude of gravitational acceleration appearing on the three axes changes depending on the attitude of the sensor, and thus the gravitational acceleration can be used for correction. Still more, it is also possible to correct an attachment strength (tension level at applying tension) when the vibration sensor 20 is attached to equipment.

Next, the abnormality detector 13 determines whether the abnormal operation region has been generated (Step S102). When the abnormal operation region has not been generated (Step S102, No), the abnormality detector 13 generates an abnormal operation region (Step S103). Generation of the abnormal operation region will be described later. Next, the abnormality detector 13 acquires the vibration signal and the acoustic signal (Step S104). Next, the abnormality detector 13 executes the abnormality detection process (Step S110).

Next, the abnormality detector 13 detects an abnormality in other equipment (Step S105). Details of abnormality detection of other equipment will be described later.

Next, the abnormality detector 13 determines whether to continue the process (Step S106). When the process is to be continued (Step S106, Yes), the abnormality detector 13 determines whether a measurement condition has been changed (Step S107). When the measurement condition has been changed (Step S107, Yes), the abnormality detector 13 proceeds to the process in Step S101. When the measurement condition has not been changed (Step S107, No), the abnormality detector 13 proceeds to the process in Step S102.

On the other hand, when the process is not continued in Step S106 (Step S106, No), the abnormality detector 13 ends the process.

### Abnormality detection process

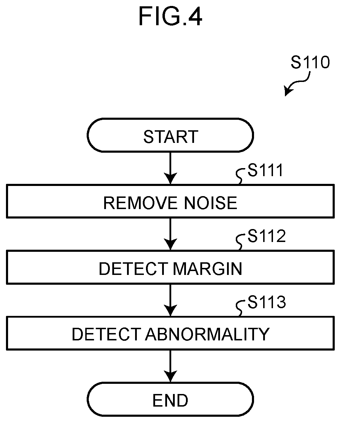

FIG. 4 is a diagram illustrating an example of a processing procedure of the abnormality detection process according to the embodiment of the present disclosure. FIG. 4 is a flowchart illustrating the example of the processing procedure of the abnormality detection process (Step S110) in FIG. 3. First, the noise remover 11 removes noise from the acoustic signal (Step S111). Next, the abnormality detector 13 detects a margin based on the acoustic signal, the vibration signal, and the abnormal operation region (Step S112). Here, the margin represents a difference in vibration and sound until the operation of the target object reaches the abnormal operation region. The detection of the margin will be described later. Next, the abnormality detector 13 detects an abnormality based on the margin (Step S113). Thereafter, the abnormality detector 13 returns to the original processing.

### Generation of information on abnormal operation region

A diagnosis region (normal operation region) is defined based on the operation (1 week or the like) of the pump 40, and the abnormal operation region is defined from start and stop operations of the pump 40. For example, a range of ±10% from a range of sound and vibration at the start and stop of the pump 40 can be defined as the normal operation region, ±15% as the quasi-abnormal operation region, and ±20% as the abnormal operation region.

### Noise removal

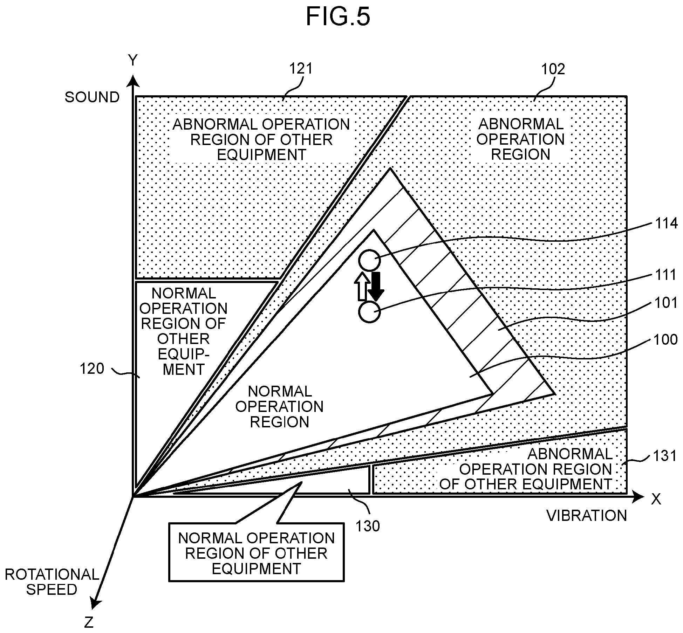

FIG. 5 is a diagram illustrating an example of noise removal according to the embodiment of the present disclosure. FIG. 5 is a graph illustrating the abnormal operation region similarly to FIG. 2. Also similarly to FIG. 2, the circle 111 represents the operation point during the normal operation. From this state, when the sound increases without a change in the vibration, the operation point shifts to a position of a circle 114 as indicated by a white arrow in the drawing. The above state in which the sound increases without a change in the vibration is considered to be a state in which sound is added due to the operation of other equipment. Therefore, a process of subtracting the change in sound and returning to the original operation point is performed (black arrow in the drawing). Accordingly, noise can be removed. A specific procedure will be described next.

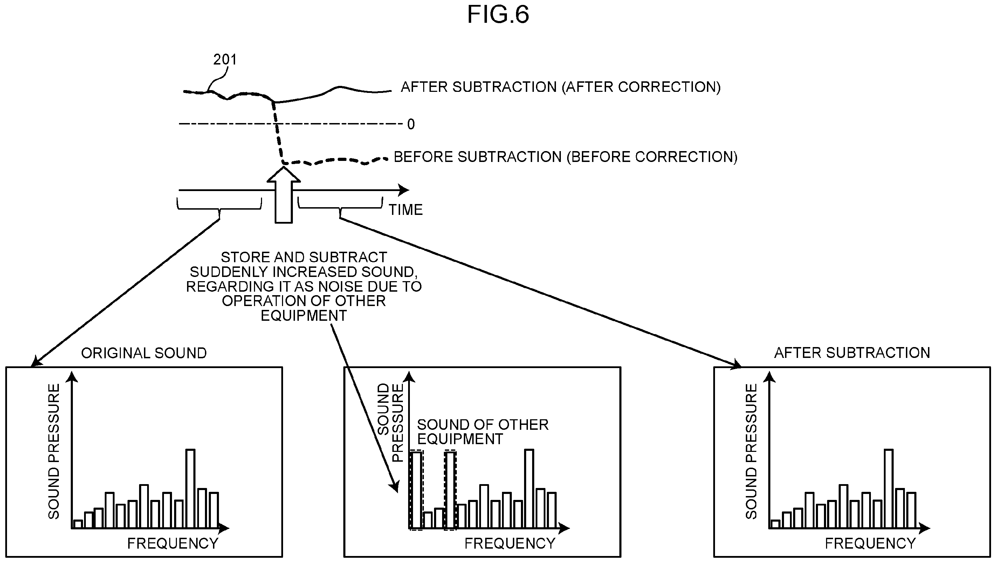

FIG. 6 is a diagram illustrating an example of a noise removal procedure according to the embodiment of the present disclosure. An upper diagram in FIG. 6 illustrates a change in the margin. Still more, a lower diagram in FIG. 6 illustrates the acoustic signal for each period of time in the upper diagram of the drawing. A lower left diagram represents the original acoustic signal before the sound changes. A lower central diagram represents a state in which the sound suddenly increases. Sound of an increased frequency component in the lower central diagram corresponds to sound (noise) due to surrounding process operation. Noise can be removed by subtracting the sound of the increased frequency component. A lower right diagram represents the acoustic signal after noise removal.

The noise remover 11 continuously records the acoustic signal and detects a sudden increase in sound. Next, the noise remover 11 performs a subtraction process of a suddenly increased sound component. Noise can be removed by the above procedure.

### Detection of margin

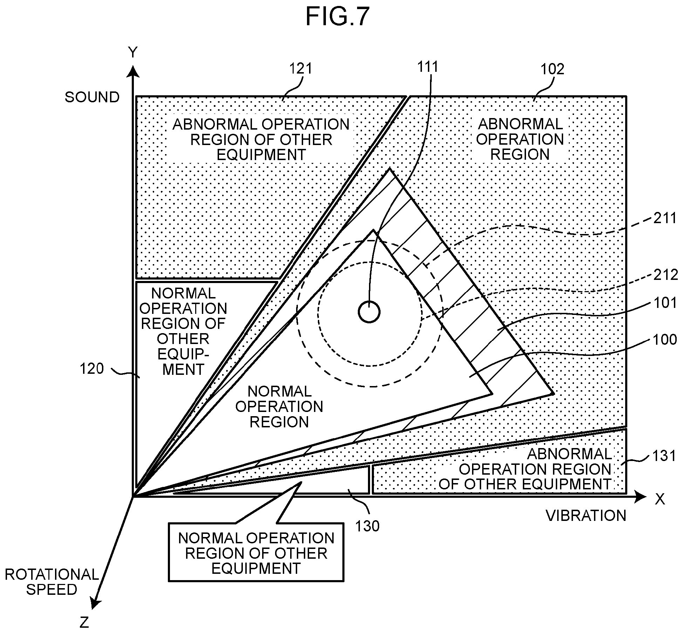

FIG. 7 is a diagram illustrating an example of detection of the margin according to the embodiment of the present disclosure. FIG. 7 is a graph illustrating the abnormal operation region similarly to FIG. 2. Also similarly to FIG. 2, the circle 111 represents the operation point during the normal operation. As described above, the margin is a difference in vibration and sound until the operation of the target object reaches the abnormal operation region. The margin can be detected by the following procedure. First, the abnormality detector 13 creates, centered on the circle 111, the smallest circle bordering the abnormal operation region 102. A dashed circle 211 in the drawing represents this circle. Next, the abnormality detector 13 detects a radius of the circle 211 as the margin.

Note that the abnormality detector 13 can further detect a difference in vibration and sound until the operation of the target object reaches the quasi-abnormal operation region 101 as a second margin. The abnormality detector 13 creates, centered on the circle 111, the smallest circle bordering the quasi-abnormal operation region 101. A dotted circle 212 in the drawing represents this circle. Next, the abnormality detector 13 detects a radius of the circle 212 as the second margin.

### Abnormality detection

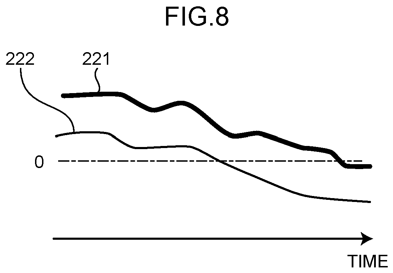

FIG. 8 is a diagram illustrating an example of abnormality detection according to the embodiment of the present disclosure. FIG. 8 illustrates an example in which an abnormality in the operation of the target object is detected based on the margin. A horizontal axis in the drawing represents time. An alternate long and short dash line in the drawing represents a level of value "0". A graph 221 represents a change in the margin. When the margin reaches the value "0", the abnormality detector 13 can determine that the operation point of the target object has reached the abnormal operation region. The margin in negative values indicates a state that the operation point is included in the abnormal operation region. As described above, the abnormality detector 13 can detect the abnormality in the operation of the target object based on the margin.

Note that a graph 222 represents a second margin. When the second margin reaches the value "0", the abnormality detector 13 can determine that the operation point of the target object has reached the quasi-abnormal operation region.

### Abnormality detection of other equipment

The abnormality detector 13 detects an abnormality in other equipment based on the regions 121 and 131 of other equipment in FIG. 2.

Note that the abnormality can also be detected based on the sound of other equipment described with reference to FIG. 6. This procedure will be described next.

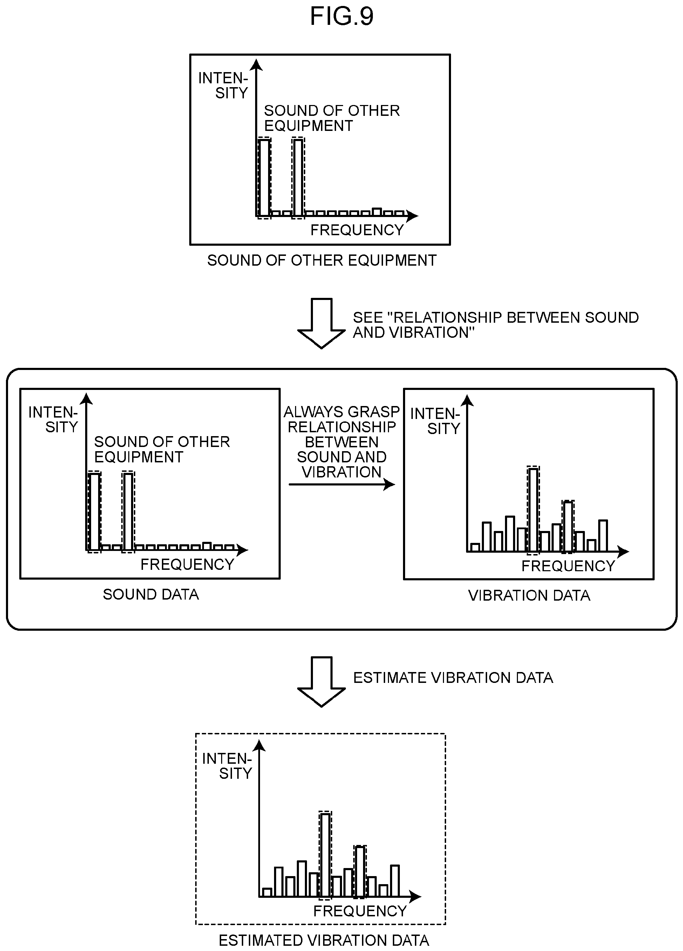

FIG. 9 is a diagram illustrating an example of abnormality detection of other equipment according to the embodiment of the present disclosure. The abnormality detector 13 extracts sounds of other equipment (upper part of FIG. 9). Next, the abnormality detector 13 estimates the vibration signal based on a relationship between sound and vibration acquired in advance (middle part of FIG. 9). Next, the abnormality detector 13 generates vibration data by estimation (lower part of FIG. 9). The abnormality detector 13 detects an abnormality in other equipment using the vibration data generated and the sound extracted from other equipment.

Note that the process in the drawing is a simple method because vibration of other equipment is not detected.

As described above, in the equipment state detection device 10 according to the embodiment of the present disclosure, the abnormality detector 13 detects an abnormality of the target object by simultaneously using the acoustic signal and the vibration signal. As a result, the abnormality detection time can be shortened.

### 2. Variation

In the above-described embodiment, a device having a movable unit such as the pump 40 is assumed as the target object to detect an abnormality. An example in which the abnormality detection is applied to other devices will be described.

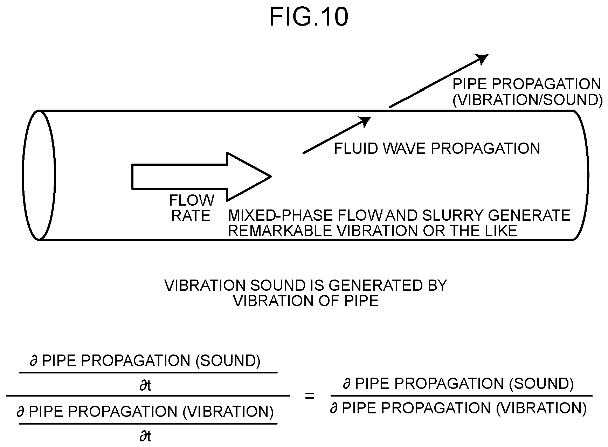

FIG. 10 is a diagram illustrating an example of variation of the embodiment of the present disclosure. FIG. 10 illustrates an example of detecting sound and vibration of a pipe. The pipe vibrates and emits a vibration sound when a liquid flows. When a mixed phase flow is generated or when a slurry flows, vibration or the like is remarkably generated. This vibration and sound can be detected to detect an abnormality of the pipe. The target object is not limited to the pump 40 and the pipe, and can be applied to other devices and equipment.

Although the embodiments of the present disclosure have been described above, the technical scope of the present disclosure is not limited to the above-described embodiments as it is, and various modifications can be made without departing from the gist of the present disclosure. Still more, components of different embodiments and variations may be appropriately combined.

Note that a series of processes by each device described in the present specification may be realized using any of software, hardware, and a combination of software and hardware. A program configuring the software is stored in advance in, for example, a storage medium (non-transitory medium) provided inside or outside each device. Then, each program is read into a RAM at the time of execution by a computer, for example, and is executed by a processor such as a CPU.

Still more, the processes described using the flowchart and the sequence diagram in the present specification may not necessarily be executed in the illustrated order. Some processing steps may be performed in parallel. Still more, additional processing steps may be employed, and some processing steps may be omitted.

Still more, the processing procedure described in the above-described embodiment may be regarded as a method including these series of procedures, and may be regarded as a program for causing a computer to execute the series of procedures or a recording medium storing the program. As this recording medium, for example, a compact disc (CD), a mini disc (MD), a digital versatile disc (DVD), a memory card, a Blu-ray (registered trademark) disc, or the like can be used.

Note that the effects described in the present specification are merely examples and are not limited, and other effects may be provided.

Although the disclosure has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An equipment state detection device comprising an abnormality detector configured to detect an abnormality of a target object based on an abnormal operation region defined according to an operation state of the target object, the abnormal operation region being a region of vibration of the target object and sound from the target object generated when the operation of the target object is abnormal.

2. The equipment state detection device according to claim 1, wherein the abnormality detector detects the abnormality based on the abnormal operation region selected according to the operation state of the target object.

3. The equipment state detection device according to claim 1 or 2, wherein the abnormality detector detects the abnormality based on a vibration signal that is a signal of vibration of the target object and an acoustic signal that is a signal of sound of the target object.

4. The equipment state detection device according to claim 3, further comprising a preprocessor configured to perform preprocessing on the vibration signal, wherein
the abnormality detector detects the abnormality based on the vibration signal preprocessed.

5. The equipment state detection device according to claim 4, wherein the preprocessor performs, as the preprocessing, at least one of detection processing of a root mean square value of the vibration signal, fast Fourier transform (FFT) processing, or statistical processing.

6. The equipment state detection device according to claim 3, further comprising a noise remover configured to remove noise included in the acoustic signal, wherein
the abnormality detector detects the abnormality based on the acoustic signal output from the noise remover.

7. The equipment state detection device according to any one of claim 1 to 5, wherein the abnormality detector outputs an alarm when the abnormality of the target object is detected.

8. The equipment state detection device according to any one of claim 1 to 7, wherein the abnormality detector further detects a difference, as a margin, in the vibration and the sound until the operation of the target object reaches the abnormal operation region.

9. The equipment state detection device according to any one of claim 1 to 8, wherein the abnormality detector further detects a quasi-abnormal operation of the target object based on a quasi-abnormal operation region that is a region bordering the abnormal operation region.

10. The equipment state detection device according to claim 9, wherein the abnormality detector outputs a warning when the quasi-abnormal operation of the target object is detected.

11. The equipment state detection device according to claim 9, wherein the abnormality detector further detects a difference, as a second margin, in the vibration and the sound until the operation of the target object reaches the quasi-abnormal operation region.

12. The equipment state detection device according to any one of claim 1 to 11, wherein the abnormality detector further detects an abnormality of other target object near the target object.

13. The equipment state detection device according to any one of claim 1 to 12, wherein the operation state is an operation load factor that is a ratio of a load to a rated load.

14. The equipment state detection device according to claim 1, further comprising a processor configured to perform processing on a vibration signal that is a signal of vibration of the target object and an acoustic signal that is a signal of sound of the target object.

15. An equipment state detection method comprising detecting an abnormality of a target object based on an abnormal operation region defined according to an operation state of the target object, the abnormal operation region being a region of vibration of the target object and sound from the target object generated when the operation of the target object is abnormal.
